# EUROPÄISCHE PATENTSCHRIFT

(11) **EP 1 002 804 B1**
(45) Veröffentlichungstag und Bekanntmachung des Hinweises auf die Patenterteilung: **23.04.2003**
(21) Anmeldenummer: 99121343.0
(22) Anmeldetag: 26.10.1999
(51) Int. Cl.: C08B 11/193, C08B 11/10

(54) **Wasserlösliche sulfoalkylgruppenhaltige hydrophob modifizierte Celluloseether, Verfahren zu deren Herstellung sowie deren Verwendung als Schutzkolloide bei Polymerisationen**
Water soluble hydrophobically modified sulphoalkyl cellulose ethers, process for making the same and their use as protective colloids in polymerisation
Dérivés sulfoalkylés de cellulose modifiés pour les rendre hydrophobes, solubles dans l'eau, procédé pour leur fabrication, et leur application comme colloides protecteurs dans la polymérisation

(30) Priorität: 27.10.1998 DE 19849441
(43) Veröffentlichungstag der Anmeldung: 24.05.2000
(73) Patentinhaber: Clariant GmbH, 65929 Frankfurt am Main (DE)
(72) Erfinder: Dönges, Reinhard, Dr., 65812 Bad Soden (DE); Wurm, Horst, 65201 Wiesbaden (DE)

(56) Entgegenhaltungen:
- EP-A- 0 511 540
- EP-A- 0 554 751
- EP-A- 0 573 852
- EP-A- 0 781 780
- US-A- 5 708 162

## Beschreibung

Die vorliegende Erfindung betrifft wasserlösliche, sulfoalkylgruppenhaltige hydrophob modifizierte Celluloseether, Verfahren zu ihrer Herstellung, und ihre Verwendung als Schutzkolloide bei Polymerisationen.

Die Herstellung von Vinylpolymeren durch radikalische Polymerisation in wäßrigem, lösemittelfreiem Medium macht eine Emulgierung der hydrophoben Monomeren und nach erfolgter Polymerisation die Stabilisierung des Polymers erforderlich. Bei der Polymerisation von Monomersystemen, die wasserunlösliche Vinylmonomere enthalten, in wäßrigen Systemen werden daher neben Tensiden auch Schutzkolloide benötigt, die einerseits hydrophilen Charakter besitzen, andererseits auch eine dispergierende Wirkung aufweisen sollen.

Die Qualität einer Kunststoffdispersion wird entscheidend durch die Wahl des Schutzkolloids beeinflußt. Wichtige Qualitätskriterien, die durch die Schutzkolloide beeinflußt werden können sind beispielsweise die Stabilität, Viskosität, Rheologie, die Teilchengröße der Polymerpartikel der Dispersion sowie die Koagulatmenge, die bei der Filtration der Dispersion durch ein Sieb zurückbleibt. Auch das Molekulargewicht wird durch das Schutzkolloid beeinflußt. Ein weiteres Qualitätskriterium ist die Wasseraufnahme eines Filmes, der durch Ausbringen und Trocknung einer Dispersion hergestellt wird. Auch diese Eigenschaft wird durch das Schutzkolloid beeinflußt. Bei der Suspensionspolymerisation steuert das Schutzkolloid die Teilchengröße des gebildeten Polymerisats.

Es ist seit langem bekannt, daß polymere Kohlenhydrate wie Stärke, Dextrane und wasserlösliche Cellulosederivate geeignete Schutzkolloide für wasserhaltige Polymerisationssysteme darstellen. Das in der kommerziellen Herstellung von Polyvinylacetat-Dispersionen am häufigsten eingesetzte Schutzkolloid ist Hydroxyethylcellulose (Cellulose and its Derivates, Kap. 26, Ellis Horwood Limited 1985), die in technischem Maßstab aus Zellstoff und Ethylenoxid hergestellt wird.

Als entscheidender Vorgang beim Einsatz von Schutzkolloiden bei der Emulsionspolymerisation wird die Radikalbildung am Schutzkolloid und anschließende Pfropfung des Monomers auf das Kolloid angesehen. Die Pfropfrate hängt von der Wahl des Radikalinitiators ab. Als Radikalstarter werden üblicherweise Diazoverbindungen, Redox-Initiatoren, organische oder anorganische Peroxoverbindungen eingesetzt. Andererseits ist die Pfropfrate auch von der Natur des Schutzkolloids abhängig. Ist die Pfropfrate gering, muß die Konzentration des Schutzkolloids entsprechend hoch gewählt werden, um eine ausreichende Wirkung zu erzielen. Eine hohe Schutzkolloid-Konzentration ist jedoch einerseits aus Kostengründen unerwünscht, andererseits führt sie auch zu einer erhöhten Hydrophilie des zu einem Film ausgezogenen Polymers, verbunden mit einer erhöhten Wasseraufnahme.

In der US-A-4,845,175 wird gezeigt, daß durch Einsatz von hydrophob mit Arylalkylgruppen modifizierter Hydroxyethylcellulose die Menge des Schutzkolloids reduziert werden kann. Hydrophob modifizierte Celluloseether besitzen jedoch eine reduzierte Löslichkeit in Wasser.

In der US-A-4,868,238 werden Carboxymethylgruppen tragende hydrophob modifizierte Celluloseether als Schutzkolloide in der Suspensionspolymerisation beschrieben. Carboxymethylgruppen sind jedoch gegenüber mehrwertigen Kationen wie sie als Elektrolyte eingesetzt werden empfindlich.

P.Talaba, I. Srokova, P. Hodul und G. Cik beschreiben in Chem. Papers 50 (2), 101 (1996) hydrophob-modifizierte Sulfoethylcellulose. Diese Verbindungen benötigen jedoch auf Grund des Fehlens anderer Substituenten hohe Substitutionsgrade. Sie sind nur bei niedrigen Polymerisationsgraden wasserlöslich und besitzen eine starke Schaumbildungstendenz, was für den Einsatz in Dispersionsfarben unerwünscht ist.

In der EP-A-0 781 780 werden sulfoalkylierte mit C₁₀-C₄₀-Alkylketten hydrophob modifizierte Celluloseether beschrieben, die ebenfalls hohe Tensidwirkung besitzen und als Verdicker in Kosmetikformulierungen eingesetzt werden. Für diese Verbindungen wird ein Sulfoalkylierungsgrad von 0,1 bis 1 beansprucht.

Aufgabe der vorliegenden Erfindung war es daher, neuartige Schutzkolloide für Polymerisationen in wäßrigen Systemen zu entwickeln, die bei reduzierter Einsatzmenge und guter Verarbeitbarkeit die gleiche oder bessere Qualität der hergestellten Kunststoffdispersionen oder -suspensionen gewährleisten.

Es wurde überraschenderweise gefunden, daß hydrophob substituierte Sulfoalkyl-HEC hervorragend als Schutzkolloid in der Emulsionspolymerisation geeignet sind, wenn der Substitutionsgrad bezüglich hydrophober Alkylgruppen größer oder gleich 0,001 ist, jedoch 1,0, vorzugsweise 0,2 Alkylgruppen pro Monomereinheit nicht übersteigt. Bei Verwendung derartiger Schutzkolloide ist eine wesentlich geringere Einsatzmenge gegenüber herkömmlichen HEC-Schutzkolloiden erforderlich.

Gegenstand der Erfindung sind daher wasserlösliche, ionische Celluloseether aus der Gruppe der Hydroxyalkylcellulosen, die mit durchschnittlich 0,001 bis 1,0, vorzugsweise 0,001 bis 0,2, Alkylgruppen pro Anhydroglucoseeinheit und einer Anzahl an Hydroxyalkylgruppen pro Anhydroglucoseeinheit (MS) von mindestens 2,31 substituiert sind und 0,01 bis 0,1 Sulfoalkylgruppen pro Anhydroglucoseeinheit tragen.

Bevorzugt sind Celluloseether der allgemeinen Formel

[C₆H₇O₂(OR¹)(OR²)(OR³)]ₘ

- wobei C₆H₇O₂: eine Anhydroglucoseeinheit,
- m: 50 - 3000, insbesondere 100 - 1000,
- und R¹, R², R³: unabhängig voneinander eine Polyalkylenoxidkette der allgemeinen Formel

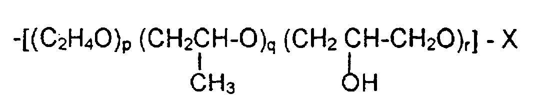

mit X = H, CₙH₂ₙ₊₁, CH₂-CH₂-SO₃Y, CH₂-CHOH-CH₂SO₃Y,
wobei n = 4 - 20
und Y = H, Na, K
darstellt, worin
p, q, und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5, vorzugsweise 1,5 bis 3,0, ist und wobei die Reihenfolge der Oxyalkyleinheiten in der Polyalkylenoxidkette beliebig ist und die durchschnittliche Anzahl der hydrophob modifizierten Gruppen pro Anhydroglucoseeinheit (DS HM) 0,001 bis 0,2, vorzugsweise 0,01 bis 0,04, beträgt und die durchschnittliche Anzahl der Sulfoalkylgruppen pro Anhydroglucoseeinheit 0,01 bis 0,1, vorzugsweise 0,01 bis 0,09, beträgt. Vorzugsweise sind die Sulfoalkylgruppen Sulfoethylgruppen.

Gegenstand der vorliegenden Erfindung sind auch Verfahren zur Herstellung der erfindungsgemäßen Celluloseether durch Veretherung von Cellulose mit einem Veretherungsmittel aus der Gruppe der Alkylenoxide und Veretherung mit einem Alkylhalogenid oder einem Alkylglycidylether und einem Sulfonat unter Basenkatalyse oder durch Veretherung von Celluloseethern aus der Gruppe der Hydroxyalkylcellulosen mit einem Alkylhalogenid oder einem Alkylglycidylether und einem Sulfonat unter Basenkatalyse, vorzugsweise
A) durch Veretherung von Cellulose mit Ethylenoxid, Propylenoxid und/oder Glycidyldalkohol und mit einem Alkylhalogenid oder einem Alkylenoxid oder einem Alkylglycidylether und einem Alkenylsulfonat oder Chloralkylsulfonat unter Basenkatalyse, vorzugsweise in einem Suspensionsmittel;
B) durch Veretherung von Hydroxyethylcellulose, Hydroxypropylcellulose, Dihydroxypropylcellulose oder einem Celluloseether mit mehreren der genannten Hydroxyalkylsubstituenten mit einem Alkylhalogenid oder einem Alkylenoxid oder einem Alkylglycidylether und einem Alkenylsulfonat oder Chloralkylsulfonat unter Basenkatalyse, vorzugsweise in einem Suspensionsmittel.

Als Suspensionsmittel werden vorzugsweise niedere Alkohole oder Ketone, beispielsweise Isopropanol, tert. Butanol oder Aceton im Gleichgewichtsverhältnis zur Cellulose von 3:1 bis 30:1 vorzugsweise 8:1 bis 15:1 eingesetzt. Als Base finden üblicherweise wäßrige Lösungen von Alkalimetallhydroxiden, insbesondere Natriumhydroxid, Verwendung. Das Molverhältnis Base/Anhydroglucoseeinheit wird durch das eingesetzte Kohlenhydrat(derivat) vorgegeben. Für den Einsatz von Cellulose (Methode A) beträgt das Molverhältnis vorzugsweise zwischen 1,0 und 1,5, für bereits veretherte Produkte (Methode B) vorzugsweise zwischen 0,1 und 1,0 Mol Base pro Anhydroglucoseeinheit.

Der Wassergehalt der Reaktionsmischung liegt vorzugsweise zwischen 5 und 30, insbesondere zwischen 10 und 20 Mol Wasser pro Anhydroglucoseeinheit.

Nach Vorlegen des Suspensionsmittels, Zugabe der Cellulose und Alkalisierung mit der wäßrigen Base wird der Ansatz gut homogenisiert und ohne Wärmezufuhr, gegebenenfalls unter Kühlung, vorzugsweise 0,5 bis 2 Stunden gerührt. Danach werden die Veretherungsreagenzien (Epoxyalkane, Alkylglycidylether und/oder Alkylhalogenide und Sulfonsäurederivate) gemeinsam oder nacheinander zugegeben. Der Ansatz wird dann vorzugsweise auf eine Temperatur im Bereich von 60 bis 120 °C, besonders bevorzugt von 80 bis 100 °C gebracht und vorzugsweise 2 bis 6 Stunden lang erhitzt. Nach Abkühlen wird mit einer Säure, vorzugsweise Salzsäure, Salpetersäure und/oder Essigsäure vorzugsweise auf pH 6 bis 8 neutralisiert. Das Suspensionsmittel wird durch Dekantieren oder Filtrieren entfernt. Der rohe Cellulosemischether kann durch Extraktion mit wäßrigen Alkoholen oder Ketonen mit einem bevorzugten Wasseranteil von 10 bis 50 Gew.-%, insbesondere Isopropanol, Ethanol und Aceton, von den anhaftenden Nebenprodukten, beispielsweise Polyglykolen, Glykolethern und Salzen befreit werden. Durch Trocknen im Vakuum oder bei Normaldruck bei 50 bis 120 °C erhält man den gewünschten Cellulosemischether als farbloses bis leicht gelbliches Pulver.

Bei Bedarf kann der erfindungsgemäß gewünschte Polymerisationsgrad des Celluloseethers vor oder im Laufe seines Herstellungsprozesses durch Zugabe einer Peroxoverbindung, wie zum Beispiel Wasserstoffperoxid oder eines Peroxodisulfatsalzes oder eines anderen Oxidationsmittels, beispielsweise Natriumchlorit, eingestellt werden. Die genannten Methoden zum Molekulargewichtsabbau und die jeweilige technische Durchführung sind Stand der Technik (T. M. Greenway in "Cellulosic Polymers, Blends and Composites", Herausg. R. D. Gilbert, Carl Hanser Verlag München, 1994, S. 178 ff.).

Geeignete Reaktionsapparate zur Herstellung der erfindungsgemäßen Celluloseetherderivate sind beispielsweise Rührkessel, Mischer und Kneter. Grundsätzlich können alle Reaktionsapparate verwendet werden, die auch bei der Herstellung von Cellulosederivaten mit nicht-hydrophoben Substituenten üblich sind und eine ausreichende Durchmischung der Cellulose oder des wasserlöslichen Celluloseethers mit den nicht-hydrophoben Reagenzien gestattet.

Ein weiterer Gegenstand der Erfindung ist die Verwendung von wasserlöslichen, ionischen Celluloseethem aus der Gruppe der Hydroxyalkylcellulosen, die mit durchschnittlich 0,001 bis 1,0, vorzugsweise 0,001 bis 0,2, Alkylgruppen pro Anhydroglucoseeinheit und einer Anzahl an Hydroxyalkylgruppen pro Anhydroglucoseeinheit (MS) von mindestens 2,31 substituiert sind und 0,01 bis 0,4, vorzugsweise 0,01 bis 0,15, besonders bevorzugt 0,01 bis 0,10 und insbesondere 0,01 bis 0,09, Sulfoalkylgruppen, vorzugsweise Sulfoethylgruppen, pro Anhydroglucoseeinheit tragen, als Schutzkolloide bei der Herstellung von wäßrigen Polymerdispersionen durch radikalisch initiierte Polymerisation von ethylenisch ungesättigten Monomeren in wäßriger Emulsion, sowie eine wässrige Polymerdispersion, hergestellt durch radikalisch initiierte Polymerisation von ethylenisch ungesättigten Monomeren in wäßriger Emulsion in Gegenwart von 0,2 bis 5,0 Gew.-%, bezogen auf die Gesamtmenge der eingesetzten Monomeren, wasserlöslichen, ionischen Celluloseethern aus der Gruppe der Hydroxyalkylcellulosen, die mit durchschnittlich 0,001 bis 1,0 Alkylgruppen pro Anhydroglucoseeinheit und einer Anzahl an Hydroxyalkylgruppen pro Anhydroglucoseeinheit (MS) von mindestens 2,31 substituiert sind und 0,01 bis 0,4 Sulfoalkylgruppen pro Anhydroglucoseeinheit tragen.

Der Anteil der erfindungsgemäßen Celluloseether bei der Herstellung von derartigen Polymerdispersionen beträgt vorzugsweise 0,2 bis 5,0 Gew.-%, und besonders bevorzugt 0,3 bis 1,0 Gew.-%, bezogen auf die Gesamtmenge der eingesetzten Monomeren.

Geeignete Monomere sind ethylenisch ungesättigte, radikalisch polymerisierbare Verbindungen, die an sich wasserunlöslich sind, beispielsweise einfache ethylenisch ungesättigte Kohlenwasserstoffe mit Kettenlängen von 2 bis 12 Kohlenstoffatomen, vorzugsweise Ethylen und Propylen; Ester mit Kettenlängen zwischen 2 und 12 Kohlenstoffatomen der Acryl-, Methacryl-, Malein-, Fumar- oder Itaconsäure, vorzugsweise Ethyl-, Propyl- und Butylester; Vinylester von unverzweigten und verzweigten Carbonsäuren mit Kettenlängen von 1 bis 12 Kohlenstoffatomen, insbesondere Vinylacetat und Versaticsäurevinylester; ethylenisch ungesättigte aromatische Verbindungen, vorzugsweise Styrol; ethylenisch ungesättigte Aldehyde und Ketone mit 3 bis 12 Kohlenstoffatomen, vorzugsweise Acrolein, Methacrolein und Methylvinylketon, halogenhaltige ethylenisch ungesättigte Verbindungen, beispielsweise Vinylchlorid.

Besonders bevorzugt sind Gemische aus den genannten Monomeren, bei denen mindestens eine Komponente ein Vinylester, vorzugsweise Vinylacetat ist. Es können auch Gemische aus einer oder mehrerer der genannten Monomeren mit hydrophilen Monomeren, beispielsweise Acrylnitril, Acrylsäure, Methacrylsäure, Itaconsäure oder deren Mischungen eingesetzt werden.

Vorzugsweise enthält eine wäßrige Polymerisationsrezeptur, in der wasserlösliche, ionische Celluloseether aus der Gruppe der Hydroxyalkylcellulosen, die mit durchschnittlich 0,001 bis 1,0 Alkylgruppen pro Anhydroglucoseeinheit substituiert sind und 0,01 bis 0,4 Sulfoalkylgruppen pro Anhydroglucoseeinheit tragen, als Schutzkolloide eingesetzt werden, 10 bis 70 Gew.-%, vorzugsweise 30 bis 60 Gew.-%, der oben genannten Monomeren, sowie 0 bis 10 Gew.-% eines oder mehrerer Emulgatoren. Als Radikalstarter werden üblicherweise Diazoverbindungen, Redox-lnitiatoren, organische oder anorganische Peroxoverbindungen in Mengen von 0,1 bis 3 Gew.-%, vorzugsweise 0,5 bis 1 Gew.-%, bezogen auf die Gesamtmenge der Monomere, eingesetzt. Weitere Hilfsstoffe, beispielsweise Puffersubstanzen oder Konservierungsstoffe, können zugesetzt werden.

Alle Komponenten können zu Beginn der Reaktion gemeinsam vorgelegt sein, wobei das Monomer, bzw. Monomergemisch durch Rührung oder andere Mischaggregate emulgiert wird. Durch Erhöhen der Temperatur wird der Polymerisationsvorgang in Gang gesetzt. Die erforderlichen Temperaturen sind abhängig vom verwendeten Initiatorsystem und betragen zwischen 40 und 120 °C. Nach Anspringen der Reaktion kann durch die Exothermie der Reaktion auch eine Kühlung erforderlich werden. Das Ende der Reaktion ist an einem Abklingen der Exothermie zu erkennen. Zur Vervollständigung der Reaktion wird wahlweise eine Nachreaktion durch äußere Wärmezufuhr nachgeschaltet. Nach Abkühlen können Hilfsstoffe zur Einstellung eines pH-Wertes, wie zum Beispiel Puffer, Säuren oder Basen oder zur Stabilisierung, beispielsweise Konservierungsstoffe zugegeben werden. Wahlweise kann die Polymerisation auch mit einem Bruchteil, beispielsweise 10 bis 20 Gew.-% der Monomer- und Radikalstartermenge gestartet werden und nach Anspringen der Reaktion weiter Monomer und Radikalstarter zudosiert werden, vorzugsweise derart, daß die gewünschte Polymerisationstemperatur durch die Zugabe gesteuert wird.

Die erfindungsgemäß erhaltenenden Dispersionen werden mit folgenden Eigenschaften charakterisiert:

Viskosität der Dispersionen bei niedrigem Schergefälle (1,0 s⁻¹):
Für eine gute Verarbeitbarkeit und Stabilität der Dispersion ist vorzugsweise eine Viskosität zwischen 10.000 und 30.000 mPa·s, insbesondere 15.000 bis 25.000, erwünscht.

Viskosität der Dispersionen bei hohem Schergefälle (≥ 250 s⁻¹):
Für eine gute Förderbarkeit der Dispersionen soll die Viskosität bei hohem Schergefälle vorzugsweise < 450 mPa·s (bei 250 s⁻¹), insbesondere 200 bis 420 mPa·s, sein.

Mittlere Teilchengröße der Dispersion:
Die mittlere Teilchengröße der Dispersion sollte vorzugsweise 200 bis 300 nm (gemessen bei einer Wellenlänge von 435 nm), sein, um ein unerwünschtes Absetzen der Dispersion (Serumbildung) zu verhindern.

Koagulatmenge nach Filtrieren der Dispersion durch ein 100 µm- und 40 µm-Sieb, ausgedrückt in mg pro 1000 g Dispersion:
Die Dispersionen haben einen Koagulatanteil von < 200 mg/kg Dispersion bei 100 µm-Filtration und < 300 mg/kg Dispersion bei 40 µm-Filtration.

Wasseraufnahme der getrockneten Polymerfilme:
Die Dispersion wird auf eine Platte ausgegossen und zu einem Film getrocknet. Nach Behandlung mit Wasser wird durch die Gewichtszunahme die 1. Wasseraufnahme (in Gew.-% des Eigengewichts des Polymerfilms) ermittelt. Nach erneutem Trocknen wird die 2. Wasseraufnahme ermittelt. Die 1. Wasseraufnahme ist in der Regel größer als die 2. Wasseraufnahme, da beim ersten Bewässern des Filmes die hydrophilen Komponenten (Emulgatoren, Schutzkolloid) herausgewaschen werden. Sie sollte vorzugsweise unter 25 %, besonders bevorzugt zwischen 5 und 20 Gew.-%, liegen.

Zusätzlich zu den aufgeführten anwendungstechnischen Parametern spielt die Pfropfausbeute des eingesetzten Schutzkolloids eine wichtige Rolle. Eine hohe Pfropfausbeute signalisiert eine hohe Effizienz des Schutzkolloids. Zu hohe Pfropfausbeuten führen allerdings zu Vernetzungen der Polymerpartikel, verbunden mit hohen Koagulatanteilen und dilatantem Fließverhalten der Dispersion. Die Pfropfausbeute sollte vorzugsweise zwischen 15 und 30 %, besonders bevorzugt zwischen 20 und 25 %, liegen.

Der Einsatz der erfindungsgemäßen hydrophob modifizierten, sulfoalkylgruppenhaltigen Hydroxyalkylcellulose bei der Herstellung von Vinyldispersionen besitzt den Vorteil, daß nur die Hälfte verglichen mit einer konventionellen, handelsüblichen Hydroxyethylcellulose eingesetzt werden muß, und daß die Dispersionen, die mit den erfindungsgemäß eingesetzten Schutzkolloiden hergestellt werden, von besserer Qualität sind. Dispersionen, die mit alkylgruppenhaltiger Hydroxyethylcellulose hergestellt werden, die außerhalb der beanspruchten Substitutionsgrade liegen, sind von deutlich schlechterer Qualität (Vergleichsbeispiele).

Die vorliegende Erfindung wird im folgenden anhand von Ausführungsbeispielen ausführlich beschrieben, ohne dadurch jedoch eingeschränkt zu werden.

### Beispiele:

Die Angaben der Substitutionsgrade beziehen sich bei Hydroxyalkylgruppen auf den molaren Substitutionsgrad (MS), bei den Alkylgruppen auf den Grad der Substitution (DS). In beiden Fällen bringen diese Werte zum Ausdruck, wie hoch der Substitutionsgrad der betreffenden Gruppe pro Anhydroglucoseeinheit ist. Der reine Wirkstoffgehalt wird durch Abzug der Wasserfeuchte und des Restsalzgehaltes des Produktes bestimmt.

### Herstellungsbeispiele:

### Beispiel 1

Als hydrophobierendes Reagenz wird ein Alkyl(C₁₅-C₁₇)-glycidylether der Fa. EMS-Chemie, Zürich (Handelsname Grilonit® RV 1814) eingesetzt.
In einem 2 I Glasreaktor mit Ankerrührer wird fein gemahlener Nadelholzzellstoff in nahezu wasserfreiem Isopropanol suspendiert. Nach dem Inertisieren (evakuieren und fluten mit Stickstoff) läßt man unter Rühren bei 25 °C 49,5 %ige Natronlauge und Wasser zulaufen. Es wird 60 Minuten bei 25 °C alkalisiert. Man läßt Ethylenoxid zulaufen, hält die Temperatur 1 Stunde lang bei 40 °C und anschließend 1 Stunde bei 80°C. Dann gibt man bei ca. 80 °C die gewünschte Menge eines Alkylglycidylethers gelöst in 20 g Isopropanol zu und verethert 2 Stunden bei 80°C. Es wird wäßrige 28,3 %ige Natriumvinylsulfonat(NaVSO₃)-Lösung zugegeben und 2 bis 3 Stunden bei 80°C zur Reaktion gebracht. Nach dem Abkühlen auf Raumtemperatur wird mit ca. 20 %iger Salzsäure neutralisiert. Das Produkt wird abgesaugt, mit 80 %igem wäßrigem Aceton bis zu einem Salzgehalt < 0,5 % gewaschen und bei 75 °C getrocknet

Die Einsatzmengen sowie die Substitutionsgrade der so erhaltenen hydrophob modifizierten Hydroxyethylsulfoethylcellulosen sind in Tabelle 1 aufgeführt.

**Tabelle 1:**

| | Einsatzmengen (g) | | | | | | | | Produkt- ausbeute g | Substitutionsgrade | | |
|---|---|---|---|---|---|---|---|---|---|---|---|---|
| Beispiel 1 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 90,0 | - | 20 | 41,0 | 121,1 | 2,46 | - | 0,07 |
| B | 75,0 | 593 | 103,6 | 40,0 | 90,0 | 6,4 | 20 | 41,0 | 123,1 | 2,49 | 0,006 | 0,07 |
| C | 75,0 | 593 | 103,6 | 40,0 | 90,0 | 12,8 | 20 | 41,0 | 121,2 | 2,42 | 0,007 | 0,07 |
| D | 75,0 | 593 | 103,6 | 40,0 | 90,0 | 19,2 | 20 | 41,0 | 121,8 | 2,53 | 0,011 | 0,08 |
| E | 75,0 | 593 | 103,6 | 40,0 | 90,0 | 25,6 | 20 | 41,0 | 119,9 | 2,49 | 0,012 | 0,08 |
| F | 85,0 | 672 | 117,4 | 45,3 | 102,0 | - | 22,7 | 46,5 | 140,1 | 2,38 | - | 0,07 |
| G | 85,0 | 672 | 117,4 | 45,3 | 102,0 | 7,3 | 22,7 | 46,5 | 136,5 | 2,33 | 0,003 | 0,07 |
| H | 85,0 | 672 | 117,4 | 45,3 | 102,0 | 14,5 | 22,7 | 46,5 | 138,8 | 2,32 | 0,005 | 0,07 |
| I | 85,0 | 672 | 117,4 | 45,3 | 102,0 | 21,8 | 22,7 | 46,5 | 137,3 | 2,39 | 0,007 | 0,07 |
| J | 85,0 | 672 | 117,4 | 45,3 | 102,0 | 29,0 | 22,7 | 46,5 | 139,4 | 2,31 | 0,010 | 0,08 |
| K | 75,0 | 593 | 103,6 | 40,0 | 90,0 | - | 20 | 62,0 | 124,3 | 2,35 | - | 0,10 |
| L | 75,0 | 593 | 103,6 | 40,0 | 90,0 | 6,4 | 20 | 62,0 | 124,5 | 2,42 | 0,006 | 0,10 |
| M | 75,0 | 593 | 103,6 | 40,0 | 90,0 | 12,8 | 20 | 62,0 | 122,3 | 2,34 | 0,007 | 0,08 |
| N | 75,0 | 593 | 103,6 | 40,0 | 90,0 | 19,2 | 20 | 62,0 | 119,5 | 2,36 | 0,010 | 0,09 |
| O | 75,0 | 593 | 103,6 | 40,0 | 90,0 | 25,6 | 20 | 62,0 | 119,6 | 2,47 | 0,012 | 0,09 |

| | | | | | | | | | | | | |
|---|---|---|---|---|---|---|---|---|---|---|---|---|
| *) LM = Lösemittel für Reagenz | | | | | | | | | | | | |

### Beispiel 2

Es wird wie in Beispiel 1 verfahren, nur daß eine höhere molare Menge an Ethylenoxid eingesetzt wird.
Die Einsatzmengen sowie die Substitutionsgrade der so erhaltenen hydrophob modifizierten Hydroxyethylsulfoethylcellulosen sind in Tabelle 2 aufgeführt.

**Tabelle 2:**

| | Einsatzmengen (g) | | | | | | | | Produkt- ausbeute g | Substitutionsgrade | | |
|---|---|---|---|---|---|---|---|---|---|---|---|---|
| Beispiel 2 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 138,4 | - | 20 | 62,0 | 142,2 | 3,59 | - | 0,04 |
| B | 75,0 | 593 | 103,6 | 40,0 | 138,4 | 6,4 | 20 | 62,0 | 142,5 | 3,61 | 0,010 | 0,04 |
| C | 75,0 | 593 | 103,6 | 40,0 | 138,4 | 12,8 | 20 | 62,0 | 140,8 | 3,62 | 0,016 | 0,06 |
| D | 75,0 | 593 | 103,6 | 40,0 | 138,4 | 19,2 | 20 | 62,0 | 143,1 | 3,67 | 0,021 | 0,04 |
| E | 75,0 | 593 | 103,6 | 40,0 | 138,4 | 25,6 | 20 | 62,0 | 149,2 | 3,59 | 0,027 | 0,03 |
| F | 75,0 | 593 | 103,6 | 40,0 | 138,4 | 38,4 | 20 | 62,0 | 145,7 | 3,80 | 0,044 | 0,03 |
| G | 75,0 | 593 | 103,6 | 40,0 | 138,4 | 64,0 | 20 | 62,0 | 143,6 | 3,75 | 0,055 | 0,04 |

| | | | | | | | | | | | | |
|---|---|---|---|---|---|---|---|---|---|---|---|---|
| *) LM = Lösemittel für Reagenz | | | | | | | | | | | | |

### Beispiel 3

Es wird wie in Beispiel 2 verfahren, nur daß hochmolekularer Linterszellstoff eingesetzt wird.
Die Einsatzmengen sowie die Substitutionsgrade der so erhaltenen hydrophob modifizierten Hydroxyethylsulfoethylcellulosen sind in Tabelle 3 aufgeführt.

**Tabelle 3:**

| | Einsatzmengen (g) | | | | | | | | Produkt-Ausbeute g | Substitutionsgrade | | |
|---|---|---|---|---|---|---|---|---|---|---|---|---|
| Beispiel 3 | Zellstoff | i-Propanol | H₂O | NaOH 49,5 % | EO | Grilonit RV1814 | LM *) | NaVSO₃ 28,3 % | | MS HE | DS HM | DS SE |
| A | 75,0 | 593 | 103,6 | 40,0 | 138,4 | - | 20 | 62,0 | 151,9 | 3,00 | - | 0,04 |
| B | 75,0 | 593 | 103,6 | 40,0 | 138,4 | - | 20 | 62,0 | 149,0 | 3,54 | - | 0,09 |
| C | 75,0 | 593 | 103,6 | 40,0 | 138,4 | 6,4 | 20 | 62,0 | 148,6 | 3,64 | 0,009 | 0,09 |
| D | 75,0 | 593 | 103,6 | 40,0 | 138,4 | 12,8 | 20 | 62,0 | 149,3 | 3,56 | 0,013 | 0,09 |
| E | 75,0 | 593 | 103,6 | 40,0 | 138,4 | 19,2 | 20 | 62,0 | 146,0 | 3,54 | 0,020 | 0,08 |
| F | 75,0 | 593 | 103,6 | 40,0 | 138,4 | 25,6 | 20 | 62,0 | 147,6 | 3,41 | 0,022 | 0,07 |
| G | 75,0 | 593 | 103,6 | 40,0 | 138,4 | 38,4 | 20 | 62,0 | 147,6 | 3,31 | 0,036 | 0,07 |
| H | 75,0 | 593 | 103,6 | 40,0 | 138,4 | 64,0 | 20 | 62,0 | 150,6 | 3,35 | 0,051 | 0,07 |
| I | 85,0 | 672 | 117,4 | 45,3 | 156,9 | - | 22,7 | 22,7 | 160,0 | 3,18 | - | 0,03 |
| J | 85,0 | 672 | 117,4 | 45,3 | 156,9 | 7,3 | 22,7 | 22,7 | 163,5 | 3,04 | 0,011 | 0,02 |
| K | 85,0 | 672 | 117,4 | 45,3 | 156,9 | 14,5 | 22,7 | 22,7 | 164,1 | 3,32 | 0,016 | 0,01 |
| L | 85,0 | 672 | 117,4 | 45,3 | 156,9 | 21,8 | 22,7 | 22,7 | 157,4 | 3,31 | 0,020 | 0,01 |
| M | 85,0 | 672 | 117,4 | 45,3 | 156,9 | 29,0 | 22,7 | 22,7 | 160,7 | 3,41 | 0,027 | 0,02 |
| N | 85,0 | 672 | 117,4 | 45,3 | 156,9 | 43,5 | 22,7 | 22,7 | 166,0 | 3,36 | 0,037 | 0,02 |
| O | 85,0 | 672 | 117,4 | 45,3 | 156,9 | 72,5 | 22,7 | 22,7 | 166,7 | 3,44 | 0,063 | 0,01 |

| | | | | | | | | | | | | |
|---|---|---|---|---|---|---|---|---|---|---|---|---|
| *) LM = Lösemittel für Reagenz | | | | | | | | | | | | |

### Beispiel 4

Es wird wie in Beispiel 2 verfahren. Zur oxidativen Molekulargewichtseinstellung wird nach der Veretherung mit dem Alkylglycidylether eine kleine Menge 3%iger Wasserstoffperoxidlösung zugegeben und 15 min bei 80°C gehalten. Danach erfolgt die Zugabe von Natriumvinylsulfonat.
Die Einsatzmengen sowie die Substitutionsgrade der so erhaltenen hydrophob modifizierten Hydroxyethylsulfoethylcellulosen sind in Tabelle 4 aufgeführt.

**Tabelle 4:**

| | Einsatzmengen (g) | | | | | | | | | Produktausbeute g | Substitutionsgrade | | |
|---|---|---|---|---|---|---|---|---|---|---|---|---|---|
| Beispiel 4 | Zellstoff | i-Propanol | H₂O | NaOH 49,5 % | EO | RV1814 | LM *) | H₂O₂ 3 % | NaVSO₃ 28,3 % | | MS HE | DS HM | DS SE |
| A | 85,0 | 672 | 112,0 | 45,3 | 156,9 | 21,8 | 22,7 | 5,5 | 70,3 | 156,6 | 3,21 | 0,027 | 0,05 |
| B | 85,0 | 672 | 114,6 | 45,3 | 156,9 | 21,8 | 22,7 | 2,8 | 70,3 | 160,2 | 3,62 | 0,023 | 0,07 |
| C | 85,0 | 672 | 116,0 | 45,3 | 156,9 | 21,8 | 22,7 | 1,4 | 70,3 | 160,0 | 3,65 | 0,021 | 0,08 |
| D | 85,0 | 672 | 112,0 | 45,3 | 156,9 | 29,0 | 22,7 | 5,5 | 70,3 | 156,7 | 3,54 | 0,024 | 0,06 |
| E | 85,0 | 672 | 114,6 | 45,3 | 156,9 | 29,0 | 22,7 | 2,8 | 70,3 | 161,0 | 3,54 | 0,028 | 0,08 |
| F | 85,0 | 672 | 116,0 | 45,3 | 156,9 | 29,0 | 22,7 | 1,4 | 70,3 | 162,0 | 3,59 | 0,025 | 0,08 |

| | | | | | | | | | | | | | |
|---|---|---|---|---|---|---|---|---|---|---|---|---|---|
| *) LM = Lösemittel für Reagenz | | | | | | | | | | | | | |

### Beispiel 5 (Vergleich)

Es wird wie in Beispiel 1 verfahren. Als hydrophobierendes Reagenz wird der Glycidylether eines Phenyloxethylates (5 Ethylenoxideinheiten) der Fa. Nagase Chemicals Ltd., Osaka (Handelsname Denacol® EX-145) eingesetzt. Die Einsatzmengen sowie die Substitutionsgrade der so erhaltenen hydrophob modifizierten Hydroxyethylsulfoethylcellulosen sind in Tabelle 5 aufgeführt.

**Tabelle 5:**

| | Einsatzmengen (g) | | | | | | | | Produktausbeute g | Substitutionsgrade | | |
|---|---|---|---|---|---|---|---|---|---|---|---|---|
| Beispiel 5 | Zellstoff | i-Propanol | H₂O | NaOH 49,5 % | EO | Denacol EX-145 | LM *) | NaVSO₃ 28,3 % | | MS HE | DS HM | DS SE |
| A | 85,0 | 672 | 117,4 | 45,3 | 118,7 | - | 22,7 | 70,3 | 146,5 | 2,78 | - | 0,09 |
| B | 85,0 | 672 | 117,4 | 45,3 | 118,7 | 9,4 | 22,7 | 70,3 | 148,6 | 2,86 | 0,008 | 0,10 |
| C | 85,0 | 672 | 117,4 | 45,3 | 118,7 | 18,9 | 22,7 | 70,3 | 151,7 | 2,95 | 0,016 | 0,10 |
| D | 85,0 | 672 | 117,4 | 45,3 | 118,7 | 28,3 | 22,7 | 70,3 | 147,5 | 2,97 | 0,027 | 0,09 |
| E | 85,0 | 672 | 117,4 | 45,3 | 118,7 | 37,8 | 22,7 | 70,3 | 147,2 | 3,02 | 0,033 | 0,09 |

| | | | | | | | | | | | | |
|---|---|---|---|---|---|---|---|---|---|---|---|---|
| *) LM = Lösemittel für Reagenz | | | | | | | | | | | | |

### Beispiel 6

Es wird wie in Beispiel 1 verfahren. Als hydrophobierendes Reagenz wird der Glycidylether eines Lauryloxethylates (C₁₂-Alkyl mit 15 Ethylenoxideinheiten) der Fa. Nagase Chemicals Ltd., Osaka (Handelsname Denacol® EX-171) eingesetzt. Die Einsatzmengen sowie die Substitutionsgrade der so erhaltenen hydrophob modifizierten Hydroxyethylsulfoethylcellulosen sind in Tabelle 6 aufgeführt.

**Tabelle 6:**

| | Einsatzmengen (g) | | | | | | | | Produktausbeute g | Substitutionsgrade | | |
|---|---|---|---|---|---|---|---|---|---|---|---|---|
| Beispiel 6 | Zellstoff | i-Propanol | H₂O | NaOH 49,5 % | EO | Denacol EX-171 | LM *) | NaVSO₃ 28,3 % | | MS HE | DS HM | DS SE |
| A | 85,0 | 672 | 117,4 | 45,3 | 118,7 | - | 22,7 | 70,3 | 146,5 | 2,78 | - | 0,09 |
| B | 85,0 | 672 | 117,4 | 45,3 | 118,7 | 23,0 | 22,7 | 70,3 | 146,5 | 2,82 | 0,006 | 0,09 |
| C | 85,0 | 672 | 117,4 | 45,3 | 118,7 | 23,0 | 22,7 | 70,3 | 147,2 | 2,69 | 0,006 | 0,10 |
| D | 85,0 | 672 | 117,4 | 45,3 | 118,7 | 46,1 | 22,7 | 70,3 | 148,1 | 2,83 | 0,010 | 0,11 |
| E | 85,0 | 672 | 117,4 | 45,3 | 118,7 | 46,1 | 22,7 | 70,3 | 150,3 | 2,89 | 0,009 | 0,10 |
| F | 85,0 | 672 | 117,4 | 45,3 | 118,7 | 69,1 | 22,7 | 70,3 | 151,9 | 2,92 | 0,012 | 0,10 |
| G | 85,0 | 672 | 117,4 | 45,3 | 118,7 | 92,1 | 22,7 | 70,3 | 150,7 | 3,09 | 0,017 | 0,11 |

| | | | | | | | | | | | | |
|---|---|---|---|---|---|---|---|---|---|---|---|---|
| *) LM = Lösemittel für Reagenz | | | | | | | | | | | | |

### Beispiel 7

Es wird wie in Beispiel 1 verfahren. Als Suspensions- und Lösemittel wird ein Gemisch aus tert. Butanol und Isopropanol eingesetzt.
Die Einsatzmengen sowie die Substitutionsgrade der so erhaltenen hydrophob modifizierten Hydroxyethylsulfoethylcellulosen sind in Tabelle 7 aufgeführt.

**Tabelle 7:**

| | Einsatzmengen (g) | | | | | | | | Produktausbeute g | Substitutionsgrade | | |
|---|---|---|---|---|---|---|---|---|---|---|---|---|
| Beispiel 7 | Zellstoff | t-BuOH + IPA | H₂O | NaOH 49,5 % | EO | Grilonit RV1814 | LM *) | NaVSO₃ 28,3 % | | MS HE | DS HM | DS SE |
| A | 85,0 | 672 | 117,4 | 45,3 | 119,0 | 21,8 | 22,7 | 70,3 | 146,2 | 3,24 | 0,021 | 0,09 |
| B | 85,0 | 672 | 117,4 | 45,3 | 112,1 | 21,8 | 22,7 | 70,3 | 177,2 | 3,28 | 0,021 | 0,11 |
| C | 85,0 | 672 | 117,4 | 45,3 | 119,0 | 21,8 | 22,7 | 46,9 | 169,4 | 3,50 | 0,026 | 0,08 |

| | | | | | | | | | | | | |
|---|---|---|---|---|---|---|---|---|---|---|---|---|
| *) LM = Lösemittel für Reagenz | | | | | | | | | | | | |

### Beispiel 8 (Vergleich)

### Herstellung einer Vinylester-Polymerdispersion unter Verwendung von Hydroxyethylcellulose.

Das verwendete Monomergemisch besteht aus 25 % ®Veova 10 (Vinylester α-verzweigter C₁₀- Carbonsäuren, Shell) und 75 % Vinylacetat. In einem 2 Liter Reaktor mit Planschliff und Deckel werden 423,09 g entionisiertes Wasser vorgelegt und unter Rühren 14 g Hydroxyethylcellulose (®Tylose H 20, entsprechend 1,06 % bezogen auf die fertige Polymerdispersion), bei Raumtemperatur zugegeben und gelöst. Danach werden der Reihe nach zugesetzt:

| | |
|---|---|
| 3,50 g | Borax |
| 11,50 g | ®Emulsogen EPA 073 |
| 20,00 g | ®Emulsogen EPN 287 |
| 0,70 g | Kaliumperoxidisulfat |
| 1,40 g | Essigsäure (99 -100 %) |
| 59,40 g | Initiatorlösung (1,17 %ige Kaliumperoxodisulfat-Lösung) |
| 70,00 g | Monomergemisch |

Die Emulsion wird innerhalb von 30 Minuten auf eine Temperatur von 74 bis 77 °C erhitzt, die 15 Minuten gehalten wird. Danach werden 630,0 Monomergemisch mit einer Dosiergeschwindigkeit von 4,49 ml/min und 85,61 g Initiatorlösung (1,17 %ig) mit einer Dosiergeschwindigkeit von 0,51 ml/min aus zwei getrennten Dosimaten zugegeben.

Die Polymerisationstemperatur stellt sich bei 80 °C ein. 630 Monomergemisch werden über eine Zeitspanne von 2 Stunden 40 Minuten hinzugefügt, die Initiatorlösung über 2 Stunden 50 Minuten.

Nach beendeter Zugabe der Chemikalien wird die Reaktionstemperatur von 80 °C über 2 Stunden beibehalten. Danach wird die Dispersion abgekühlt und bei 40 °C mit 2 g ®Mergal K 9 N (Riedel de Haën) konserviert. Die physikalischen Eigenschaften der Polymerdispersionen sind in den Tabellen 8 und 9 zusammengestellt.

Beurteilung: Die Viskosität der Dispersion bei niedrigem Schergefälle ist mit 11.700 mPa·s an der unteren tolerierbaren Grenze. Der Koagulatanteil (Sieb 40 µm) ist sehr hoch (Tabelle 9).

### Beispiel 9 (Vergleich)

Es wird wie in Beispiel 8 verfahren. Anstelle von 14 g ®Tylose H 20 werden nur 7,0 g eingesetzt.
Die Viskosität der Dispersion ist viel zu niedrig.

### Beispiel 10 (Vergleich)

Es wird wie in Beispiel 8 verfahren. Anstelle von 14 g ®Tylose H 20 (Viskositätsstufe 20 mPa·s bei 2 %) werden 14 g ®Tylose H 200 (Viskositätsstufe 200 mP·as bei 2 %) eingesetzt.
Die Dispersion ist generell als gut brauchbar zu beurteilen, jedoch ist die Viskosität bei hohen Schergefällen an der Obergrenze des gewünschten Bereichs (Tabelle 8).

### Beispiel 11 (Vergleich)

Es wird wie in Beispiel 8 verfahren. Anstelle von 14 g ®Tylose H 20 (Viskositätsstufe 20 mPa·s bei 2 %) werden 7,0 g ®Tylose H 200 (Viskositätsstufe 200 mPa·s bei 2 %) eingesetzt.
Die Viskosität der Dispersion bei niedrigen Schergefällen ist zu niedrig, die Teilchengröße zu hoch (Tabellen 8 und 9).

### Beispiel 12 (Vergleich)

Es wird wie in Beispiel 8 verfahren. Anstelle von 14 g ®Tylose H 20 werden 7 g einer Hydroxyethyl-sulfoethylcellulose (HESEC) mit einem DS (SE) von 0,007 verwendet. Die Polymerdispersion zeigt in allen anwendungstechnischen Tests mit Ausnahme der rheologischen Eigenschaften zufriedenstellende Resultate (Tabellen 8 und 9) bei um die Hälfte reduziertem Celluloseethereinsatz bezogen auf Vergleichsbeispiel 8.

### Beispiel 13

Es wird wie in Beispiel 8 verfahren. Anstelle von 14 g ®Tylose H 20 werden 7,0 g einer hydrophob modifizierten Hydroxyethyl-sulfoethylcellulose (HM-HESEC) mit einem DS (HM) von 0,006 und DS (SE) von 0,07 eingesetzt.
Die Polymerisation zeigt in allen anwendungstechnischen Test mit Ausnahme der rheologischen Eigenschaften zufriedenstellende Resultate (Tabellen 8 und 9) bei um die Hälfte reduziertem Celluloseethereinsatz, bezogen auf Vergleichsbeispiel 8.

### Beispiel 14

Es wird wie in Beispiel 8 verfahren. Anstelle von 14 g ®Tylose H 20 werden 7,0 g einer HM-HESEC mit einem DS(HM) von 0,007 und DS (SE) von 0,07 eingesetzt.
Die Rheologie der Dispersion ist als gut zu beurteilen (Tabelle 8). Die Wasseraufnahme der Polymerfilme ist als günstig zu betrachten. Der Celluloseethereinsatz ist dabei um die Hälfte reduziert, bezogen auf Vergleichsbeispiel 8.

### Beispiel 15

Es wird wie in Beispiel 8 verfahren. Anstelle von 14 g ®Tylose H 20 werden 7,0 g einer HM-HESEC mit einem DS(HM) von 0,011 und mit einem DS (SE) von 0,08 verwendet.
Die Polymerdispersion zeigt in allen anwendungstechnischen und rheologischen Tests zufriedenstellende Resultate (Tabellen 8 und 9) bei um die Hälfte reduziertem Celluloseethereinsatz, bezogen auf Vergleichsbeispiel 8.

### Beispiel 16 (Vergleich)

Es wird wie in Beispiel 8 verfahren. Anstelle von 14 g ®Tylose H 20 werden 7,0 g einer HESEC mit einem DS (SE) von 0,1 verwendet.
Die Polymerdispersion zeigt zu hohe Wasserwerte (Tabelle 9) bei um die Hälfte reduziertem Celluloseethereinsatz, bezogen auf Vergleichsbeispiel 8.

### Beispiel 17

Es wird wie in Beispiel 8 verfahren. Anstelle von 14 g ®Tylose H 20 werden 7,0 g einer HM-HESEC mit einem DS(HM) von 0,006 und mit einem DS(SE) von 0,1 verwendet.
Die Polymerdispersion zeigt in allen Kenndaten günstige Resultate.

### Beispiel 18

Es wird wie in Beispiel 8 verfahren. Anstelle von 14 g ®Tylose H 20 werden 7,0 g einer HM-HESEC mit einem DS(HM) von 0,007 und mit einem DS(SE) von 0,08 verwendet.
Die Polymerdispersion zeigt in allen anwendungstechnischen und rheologischen Tests sehr gute Resultate (Tabellen 8 und 9) bei um die Hälfte reduziertem Celluloseethereinsatz, bezogen auf Vergleichsbeispiel 8.

### Beispiel 19

Es wird wie in Beispiel 8 verfahren. Anstelle von 14 g ®Tylose H 20 werden 7,0 g HM-HESEC mit einem DS(HM) von 0,01 und mit einem DS(SE) von 0,09 verwendet.
Die Polymerdispersion zeigt in allen anwendungstechnischen und rheologischen Tests gute Resultate (Tabellen 8 und 9) bei um die Hälfte reduziertem Celluloseethereinsatz, bezogen auf Vergleichsbeispiel 8.

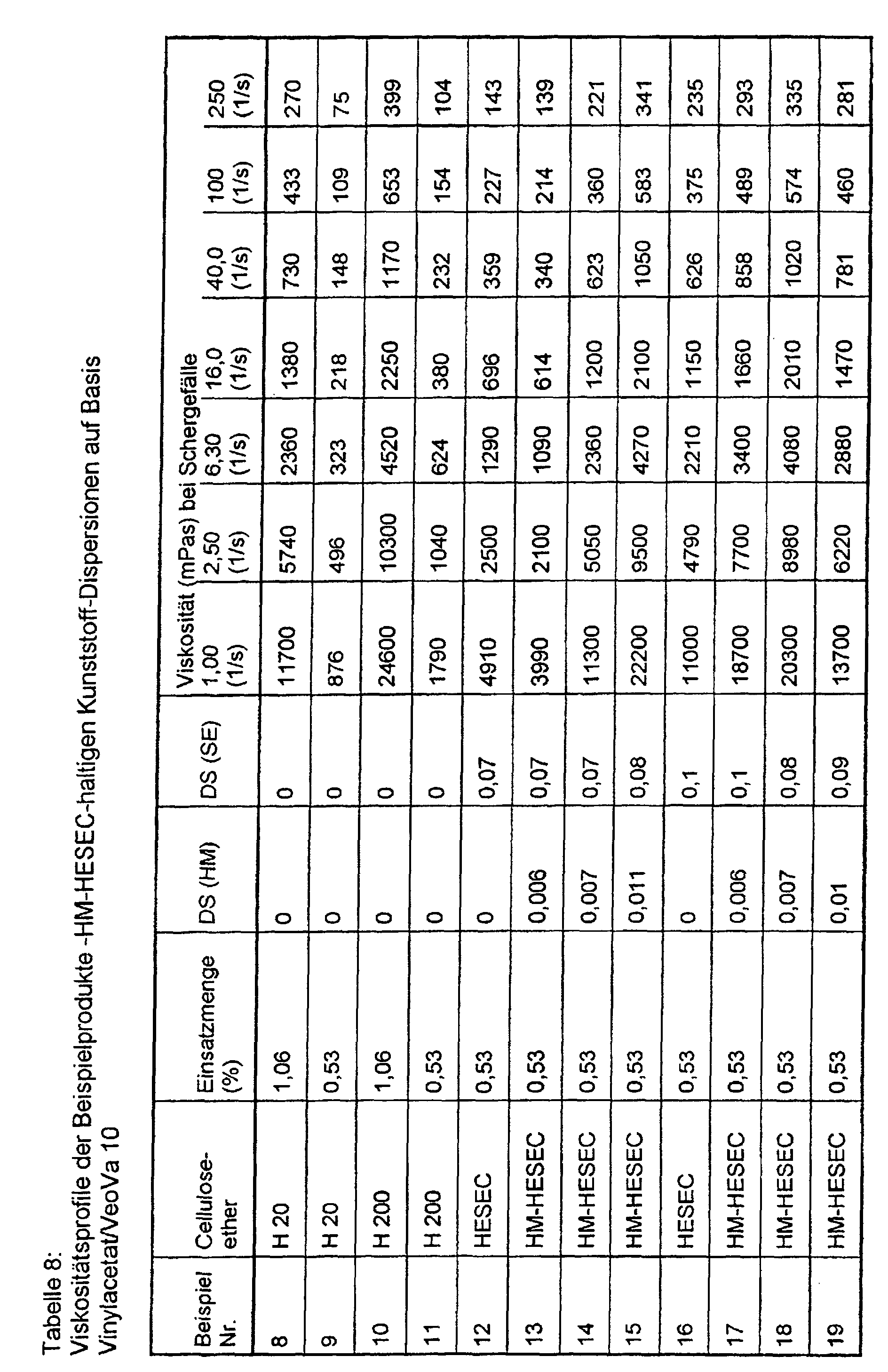

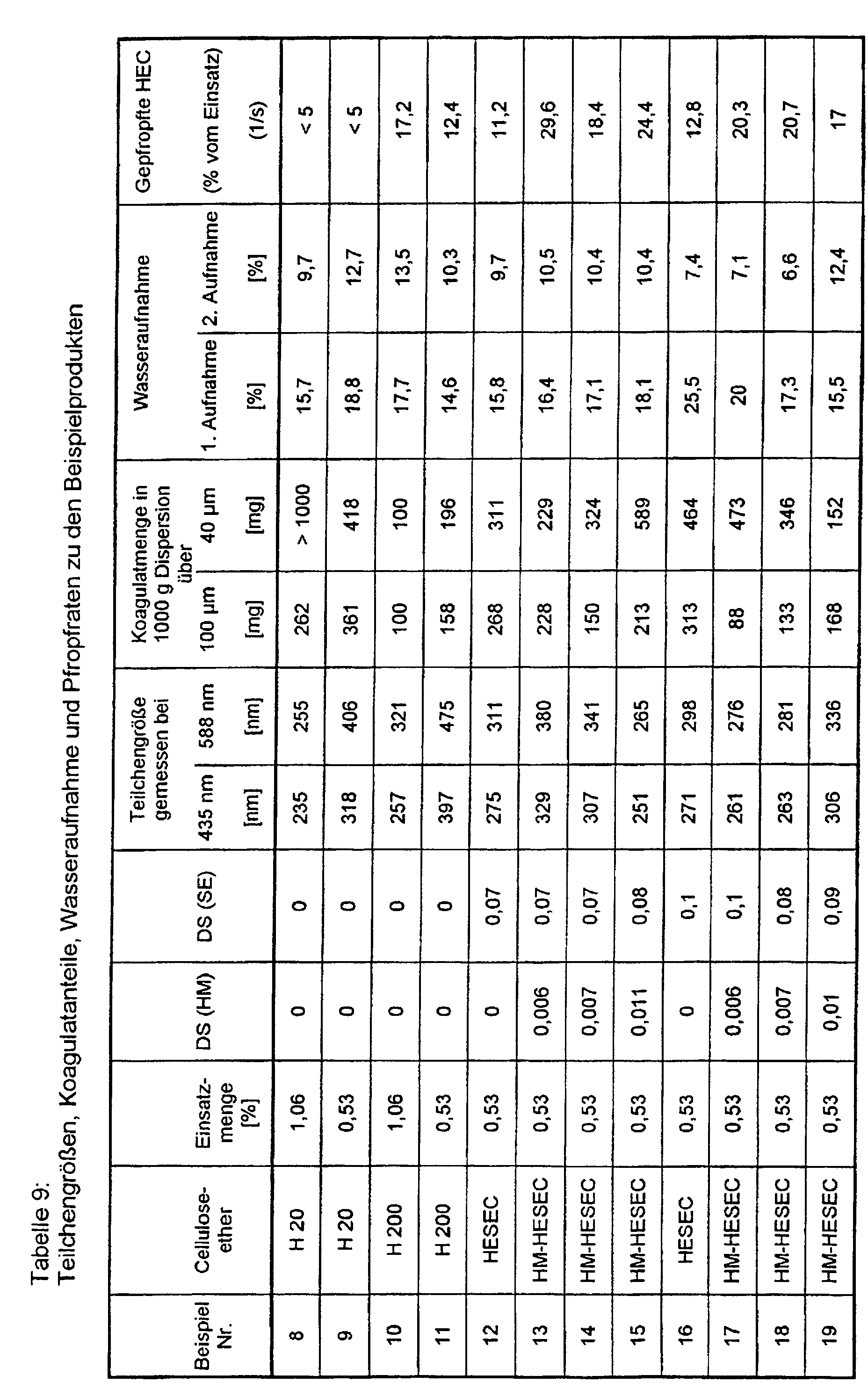

## Patentansprüche

1. Wasserlösliche, ionische Celluloseether aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2,31 substituiert sind und 0,01 bis 0,1 Sulfoalkylgruppen pro Anhydroglucoseeinheit tragen.

2. Celluloseether gemäß Anspruch 1, **dadurch gekennzeichnet, daß** die durchschnittliche Anzahl an Alkylgruppen pro Anhydroglucoseeinheit 0,001 bis 0,2 beträgt.

3. Celluloseether gemäß Anspruch 1 oder 2 der allgemeinen Formel
[C₆H₇O₂(OR¹)(OR²)(OR³)]ₘ
wobei
C₆H₇O₂ eine Anhydroglucoseeinheit,
m 50 - 3000, und
R¹, R², R³ unabhängig voneinander eine Polyalkylenoxidkette der allgemeinen Formel 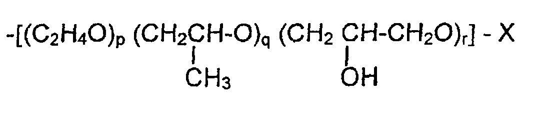
mit X = H, CₙH₂ₙ₊₁, CH₂-CH₂-SO₃Y, CH₂-CHOH-CH₂SO₃Y,
wobei
n = 4 - 20 und
Y = H, Na, K
darstellen, worin p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5 ist und wobei die Reihenfolge der Oxyalkyleinheiten in der Polyalkylenoxidkette beliebig ist und die durchschnittliche Anzahl der hydrophob modifizierten Gruppen pro Anhydroglucoseeinheit (DS HM) 0,001 bis 0,2 beträgt und die durchschnittliche Anzahl der Sulfoalkylgruppen pro Anhydroglucoseeinheit 0,01 bis 0,1 beträgt.

4. Celluloseether gemäß mindestens einem der vorhergehenden Ansprüche, **dadurch gekennzeichnet, daß** die durchschnittliche Anzahl der hydrophob modifizierten Gruppen pro Anhydroglucoseeinheit (DS HM) 0,01 bis 0,04 beträgt.

5. Celluloseether gemäß mindestens einem der vorhergehenden Ansprüche, **dadurch gekennzeichnet, daß** die durchschnittliche Anzahl der Sulfoalkylgruppen pro Anhydroglucoseeinheit 0,01 bis 0,09 beträgt.

6. Celluloseether gemäß mindestens einem der vorhergehenden Ansprüche, **dadurch gekennzeichnet, daß** die Sulfoalkylgruppen Sulfoethylgruppen sind.

7. Verfahren zur Herstellung der Celluloseether gemäß mindestens einem der Ansprüche 1 bis 6 durch Veretherung von Cellulose mit einem Veretherungsmittel aus der Gruppe der Alkylenoxide und Veretherung mit einem Alkylhalogenid oder einem Alkylglycidylether und einem Sulfonat unter Basenkatalyse.

8. Verfahren zur Herstellung der Celluloseether gemäß mindestens einem der Ansprüche 1 bis 6 durch Veretherung von Celluloseethern aus der Gruppe der Hydroxyalkylcellulosen mit einem Alkylhalogenid oder einem Alkylglycidylether und einem Sulfonat unter Basenkatalyse.

9. Verwendung von wasserlöslichen, ionischen Celluloseethern aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2,31 substituiert sind und 0,01 bis 0,4 Sulfoalkylgruppen pro Anhydroglucoseeinheit tragen als Schutzkolloide bei der Herstellung von wäßrigen Polymerdispersionen.

10. Wäßrige Polymerdispersionen, hergestellt durch radikalisch initiierte Polymerisation von ethylenisch ungesättigten Monomeren in wäßriger Emulsion in Gegenwart von 0,2 bis 5,0 Gew.-%, bezogen auf die Gesamtmenge der eingesetzten Monomeren, wasserlöslichen, ionischen Celluloseethern aus der Gruppe der Hydroxyalkylcellulosen, die mit durchschnittlich 0,001 bis 1,0 Alkylgruppen pro Anhydroglucoseeinheit und mit einer Anzahl an Hydroxyalkylgruppen pro Anhydroglucoseeinheit (MS) von mindestens 2,31 substituiert sind und 0,01 bis 0,4 Sulfoalkylgruppen pro Anhydroglucoseeinheit tragen.

## Claims

1. A water-soluble ionic cellulose ether from the group of hydroxyalkylcelluloses which is substituted by on average from 0.001 to 1.0 alkyl group per anhydroglucose unit and by a number of hydroxyalkyl groups per anhydroglucose unit (MS) of at least 2.31 and which carries from 0.01 to 0.1 sulfoalkyl group per anhydroglucose unit.

2. A cellulose ether as claimed in claim 1, wherein the average number of alkyl groups per anhydroglucose unit is from 0.001 to 0.2.

3. A cellulose ether as claimed in claim 1 or 2, of the formula
[C₆H₇O₂(OR¹)(OR²)(OR³)]ₘ
where
C₆H₇O₂ is an anhydroglucose unit,
m is 50 - 3000, and
R¹, R², R³ independently of one another are each a polyalkylene oxide chain of the formula 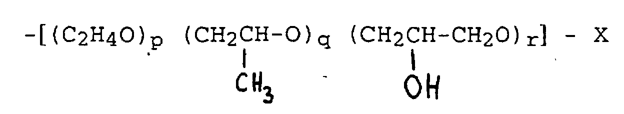
where X = H, CₙH₂ₙ₊₁, CH₂-CH₂-SO₃Y or CH₂-CHOH-CH₂SO₃Y,
where
n = 4 - 20 and
Y = H, Na or K,
and in which
p, q, and r independently of one another in R¹, R² and R³ can each independently assume values from 0 to 4, the sum of all (p+q+r) added over R¹, R² and R³ per anhydroglucose unit is on average greater than 1.3 and less than 4.5, the sequence of the oxyalkyl units in the polyalkylene oxide chain is arbitrary, and the average number of hydrophobically modified groups per anhydroglucose unit (DS HM) is from 0.001 to 0.2, and the average number of sulfoalkyl groups per anhydroglucose unit is from 0.01 to 0.1.

4. A cellulose ether as claimed in at least one of the preceding claims, wherein the average number of hydrophobically modified groups per anhydroglucose unit (DS HM) is from 0.01 to 0.04.

5. A cellulose ether as claimed in at least one of the preceding claims, wherein the average number of sulfoalkyl groups per anhydroglucose unit is from 0.01 to 0.09.

6. A cellulose ether as claimed in at least one of the preceding claims, wherein the sulfoalkyl groups are sulfoethyl groups.

7. A process for preparing a cellulose ether as claimed in at least one of claims 1 to 6 by etherifying cellulose with an etherifying agent from the group of alkylene oxides and etherifying with an alkyl halide or an alkyl glycidyl ether and a sulfonate, with base catalysis.

8. A process for preparing a cellulose ether as claimed in at least one of claims 1 to 6 by etherifying cellulose ethers from the group of hydroxyalkylcelluloses with an alkyl halide or an alkyl glycidyl ether and a sulfonate, with base catalysis.

9. The use of a water soluble ionic cellulose ether from the group of hydroxyalkylcelluloses which is substituted by on average from 0.001 to 1.0 alkyl group per anhydroglucose unit and by a number of hydroxyalkyl groups per anhydroglucose unit (MS) of at least 2.31 and which carries from 0.01 to 0.4 sulfoalkyl group per anhydroglucose unit as a protective colloid in the preparation of aqueous polymer dispersions.

10. An aqueous polymer dispersion prepared by free-radically-initiated polymerization of ethylenically unsaturated monomers in an aqueous emulsion in the presence of from 0.2 to 5.0% by weight, based on the total amount of monomers used, of water-soluble ionic cellulose ethers from the group of hydroxyalkylcelluloses which are substituted by on average from 0.001 to 1.0 alkyl group per anhydroglucose unit and by a number of hydroxyalkyl groups per anhydroglucose unit (MS) of at least 2.31 and which carry from 0.01 to 0.4 sulfoalkyl group per anhydroglucose unit.

## Revendications

1. Ethers cellulosiques ioniques, hydrosolubles, pris dans le groupes des hydroxyalkylcelluloses substituées en moyenne par 0,001 à 1,0 groupe alkyle par unité d'anhydroglucose et un nombre de groupes hydroxyalkyles par unité d'anhydroglucose (MS) d'au moins 2,31 et qui portent de 0,01 à 0,1 groupe sulfoalkyle par unité d'anhydroglucose.

2. Ethers cellulosiques selon la revendication 1, **caractérisés en ce que** le nombre moyen de groupes alkyles par unités d'anhydroglucose est de 0,001 à 0,2.

3. Ethers cellulosiques selon la revendication 1 ou 2 de formule générale
[C₆H₇O₂(OR¹)(OR²)(OR³)]ₘ
où C₆H₇O₂ représente une unité d'anhydroglucose,
m de 50 à 3000,
et R¹, R², R³ représentent, indépendamment les uns des autres, une chaîne polyoxyalkylène de formule générale 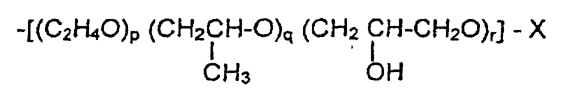
où
X = H, CₙH₂ₙ₊₁, CH₂CH₂SO₃Y, CH₂CHOH-CH₂SO₃Y,
n = 4-20 et
et Y = H, Na, K,
où
p, q et r indépendamment les uns des autres dans R¹, R² et R³ peuvent posséder chacun indépendamment des valeurs de 0 à 4, la somme de tous (p+q+r) additionée de R¹, R² et R³ par unité d'anhydroglucose est en moyenne supérieure à 1,3 et inférieure à 4,5, et la succession des unités oxyalkylènes dans la chaîne polyoxyalkylène est arbitraire et le nombre moyen des groupes hydrophobisés par modification par unité d'anhydroglucose (DS HM) est de 0,001 à 0,2 et le nombre moyen des groupes sulfoalkyles par unité d'anhydroglucose est de 0,01 à 0,1.

4. Éthers cellulosiques selon au moins l'une des revendications précédentes, **caractérisés en ce que** le nombre moyen de groupes hydrophobisés par modification est de 0,01 à 0,04 par unité d'anhydroglucose (DS HM).

5. Éthers cellulosiques selon au moins l'une des revendications précédentes, **caractérisés en ce que** le nombre moyen des groupes sulfoalkyles par unité d'anhydroglucose est de 0,01 à 0,09.

6. Éthers cellulosiques selon au moins l'une des revendications précédentes, **caractérisés en ce que** les groupes sulfoalkyles sont des groupes sulfoéthyle.

7. Procédé de préparation d'éthers cellulosiques selon au moins l'une des revendications 1 à 6 par éthérification de cellulose par un agent d'étherification pris dans le groupe des oxydes d'alkylènes et par éthérification par un halogénure d'alkyle ou un éther alkylglycidylique et un sulfonate sous catalyse basique.

8. Procédé pour la préparation des éthers cellulosiques selon au moins l'une des revendications 1 à 6, par éthérification d'éthers cellulosiques pris dans le groupe des hydroxyalkylcelluloses par un halogénure d'alkyle ou un éther alkylglycidylique et un sulfonate sous catalyse basique.

9. Utilisation d'éthers cellulosiques ioniques, hydrosolubles, pris dans le groupe des hydroxyalkylcelluloses qui sont substituées en moyenne par 0,001 à 1,0 groupe alkyle par unité d'anhydroglucose et un nombre de groupes hydroxyalkyles par unité d'anhydroglucose (MS) d'au moins 2,31 et qui portent de 0,01 à 0,4 groupe sulfoalkyle par unité d'anhydroglucose, en tant que colloïdes protecteurs dans la préparation de dispersions aqueuses de polymères.

10. Dispersions aqueuses de polymères, préparées par polymérisation radicalaire de monomères à insaturation éthylénique en émulsion aqueuse en présence de 0,2 à 5,0 % en poids, par rapport à la quantité totale des monomères utilisés, d'éthers cellulosiques ioniques, hydrosolubles, pris dans le groupe des hydroxyalkylcelluloses qui sont substitués en moyenne par 0,001 à 1,0 groupe alkyle par unité d'anhydroglucose et un nombre de groupes hydroxyalkyles par unité d'anhydroglucose (MS) d'au moins 2,31 et qui portent de 0,01 à 0,4 groupe sulfoalkyle par unité d'anhydroglucose.
